# EUROPEAN PATENT APPLICATION

(11) **EP 4 549 686 A1**
(43) Date of publication of application: **07.05.2025**
(21) Application number: 23206735.5
(22) Date of filing: 30.10.2023
(51) Int. Cl.: E05B 79/06, E05B 85/10, B60J 5/04

(54) **DOOR STRUCTURE FOR A MOTOR VEHICLE**

(71) Applicant: MINEBEA ACCESSSOLUTIONS ITALIA S.P.A., 10044 Pianezza (IT)
(72) Inventor: VIETTI, Andrea, 10044 PIANEZZA (IT); TROPINI, Alberto, 10044 PIANEZZA (IT); FRATTINI, Massimo, 10044 PIANEZZA (IT)
(74) Representative: Germain Maureau

(57) **Abstract**

The invention relates to a door structure (1) of a motor vehicle, comprising:
a door panel (2),
a door handle (3) arranged on a first side (2a) of the door panel (2) to perform an opening/closing operation of the structure,
at least one fixing means (4) of the handle extending at least partially on a second side of the door panel (2) and opposite to the first side (3a),
the fixing means (4) having at least two longitudinal portions (4a, 4b) each secured to a first end (4e1) of the door handle (3), and to a second end (4e2) of the door panel (2),
wherein it comprises a reinforcement structure (5) configured to secure the two longitudinal portions (4a, 4b) to each other.

## Description

### Introduction

The present invention concerns a door structure for a motor vehicle.

Without being limited thereto, the invention particularly applies to the handles of wing handle type vehicles.

### State of the art

The fixation of the door handle is a critical part of the door manufacturing process, as it ensures the safety and reliability of the door by allowing easy opening and closing of the door. Many techniques have been used to fix door handles, but they all have drawbacks that need to be addressed to improve the quality and performance of the product.

Commonly used techniques for fixing door handles include the use of screws, rivets, and fastening tabs. The use of screws is common in furniture doors and lightweight doors, but this method can result in loosening over time and a loss of handle stability. The use of rivets is common in automobile doors and machine doors, but this method can be expensive and requires specific tools for installation.

The use of fastening tabs is a common method for fixing door handles, as it is easy to install, economical, and offers good handle stability. However, this method can present a significant drawback. Fastening tabs often exhibit significant bending between the part of these tabs fixed to the handle and the part that is fixed to the door panel, which can lead to premature wear and a loss of handle stability.

Generally, fastening tabs have several tabs that are used to attach a handle, as this allows the tension or load to be distributed over a larger surface and thus ensure a stable and robust attachment. The tabs are often made of steel or aluminum, to combine strength and lightness.

The means of fastening using tabs can be applied to different types of vehicle door handles, among which wing handle type handles. Door handles of the wing handle type have gained popularity due to their distinctive appearance and increased functionality, providing an easier grip for drivers and passengers. However, smaller door handles of the wing handle type can be susceptible to robustness issues due to their attachment to the door panel by such fastening tabs or means of fastening tabs. But these drawbacks are also observed in other types of locks fixed to the door panel by the same means.

### Technical problem

The fastening tabs can become loose or break, which can cause damage to the handle and additional repair costs for car owners.

Particularly, the significant bending of fastening tabs between the part of each of these tabs fixed to the handle and the part of each of these tabs that is fixed to the door panel, can lead to premature wear and a loss of handle stability.

Therefore, it is necessary to develop a solution that improves handle stability by reducing this bending.

The present invention aims to solve this technical problem by proposing a new door structure solution that reduces the bending of fastening tabs, thereby improving handle stability and reliability.

As a result, the objective of the present invention is to provide a door structure that improves the reliability and stability of the handle by reducing the bending of fastening tabs between the part of these tabs fixed to the handle and the part that is fixed to the door panel.

To this end, the invention relates to a door structure of a motor vehicle, comprising:
a door panel,
a door handle arranged on a first side of the door panel to perform an opening/closing operation of the structure,
fixing means of the handle extending at least partially on a second side of the door panel and opposite to the first side,
the fixing means comprising at least two longitudinal portions each secured at a first end to the door handle, and at a second end to the door panel,
wherein the door structure comprises a reinforcement structure configured to secure the two longitudinal portions to each other

Thanks to this invention, it is now possible to provide a door structure that solves the problem of loosening and breaking of fastening tabs, which can cause damage to the handle and result in additional repair costs for car owners. Specifically, this innovative structure is designed to significantly reduce the excessive bending of the fastening tabs between the part fixed to the handle and that fixed to the door panel. This helps to avoid premature wear and maintain handle stability, ensuring greater durability and increased safety for drivers. Furthermore, this solution offers the advantage of being easily adaptable to different car models and can be installed quickly and easily, without requiring special skills in car repair.

According to one embodiment of the invention, the reinforcement structure comprises at least two lateral portions connected together by a central portion, and in that each lateral portion is configured to receive at least partially the corresponding longitudinal portion of the fixing means.

According to one embodiment of the invention, each longitudinal portion of the fixing means is at least partially received through a ring of the corresponding lateral portion of the reinforcement structure.

According to one embodiment of the invention, each lateral portion of the reinforcement structure comprises a longitudinal portion formed of part of a reinforcement plate provided to sandwich the corresponding longitudinal portion of the fixing means between said reinforcement plate and the door panel.

According to one embodiment of the invention, each lateral portion has a slot provided to receive a portion of the door panel.

According to one embodiment of the invention the reinforcement structure only allows access to an opening for attaching the longitudinal portions to the door panel if the reinforcement structure with the slots is correctly attached on the portion of the door panel.

According to one embodiment of the invention, the portion of the door panel receiving the slot of a lateral portion corresponds to a portion of the contour of an opening of the door panel.

According to one embodiment of the invention, the reinforcement structure forms a U-shape, of which the two lateral portions form the arms of the U-shape.

According to one embodiment of the invention, the reinforcement structure is in one piece.

The present invention will be described with reference to the accompanying drawings, which are provided for illustrative purposes and should not be construed as limiting the scope of the invention. The drawings illustrate particular examples of the invention, but other embodiments are possible without departing from the spirit of the invention as claimed. The same or similar elements may be designated by different reference numerals in the different figures.

### Description of the drawings

Figure 1 shows a perspective view from inside a door panel illustrating the mounting of a wing handle door handle on a door panel with fixing means according to a known configuration of the prior art.
Figure 2 shows a sectional view of Figure 1 illustrating the assembly of the door handle to the door panel.
Figure 3 shows a rear view of the door panel and door handle configuration in Figure 1, equipped with a reinforcing structure according to the invention.
Figure 4 shows a sectional view of Figure 3 illustrating the assembly of the door handle to the door panel with the reinforcing structure.
Figure 5 shows an enlargement of Figure 4 illustrating in more detail the assembly of the reinforcing structure to the reinforcing plate.
Figure 6a shows a perspective view where the door panel has been simplified and where the reinforcing plate is not shown, in order to better illustrate the reinforcing structure.
Figure 6b shows a perspective view of figure 6a where the reinforcing structure is mounted to the fixing means of the door handle.

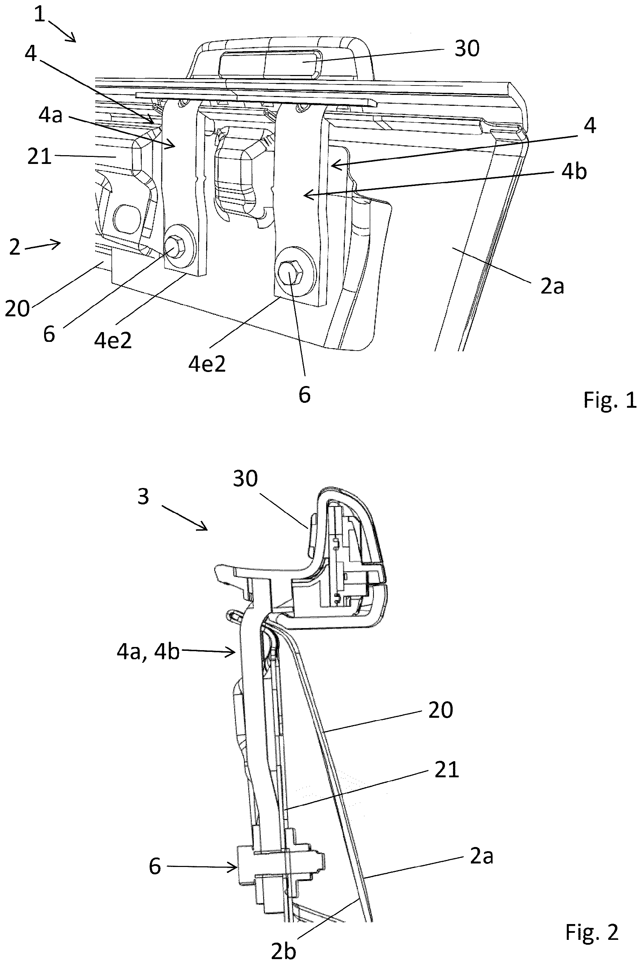

In figures 1 and 2, we have depicted a door structure 1 for a motor vehicle, comprising a door panel 2 and a door handle 3 arranged on a first side 2a of the door panel 2 for performing an opening/closing operation of the structure.

The door structure 1 of a vehicle door panel is generally composed of several assembled elements. The door panel 2 is often made of an outer sheet metal which is usually made of steel or aluminum, an inner sheet metal, and an insulating layer made of foam or similar material.

The door panel 2 is generally attached to the body structure of the vehicle using bolts and nuts or clips or welding or glue.

Furthermore, a door panel 2 also includes a reinforcement plate 21 located inside the door panel 2. This reinforcement plate 21 is often made of steel or aluminum and allows the door handle 3 to be fixed to the door panel 2.

In the figures, the door panel 2 is shown with an outer sheet metal 20 and such a reinforcement plate 21.

The reinforcement plate 21 is assembled to the outer sheet metal by riveting or by welding or by glue.

The door handle 3 shown is a wing handle type that is subject to robustness issues due to its attachment to the door panel.

The handle has a curved shape, allowing it to be gripped by a user's hand.

To ensure the fixing of this door handle 3, a fixing means 4 is generally provided.

When the door handle 3 is operated, pressure is applied to a handle actuation button 30 to unlock the door associated with the door handle 3. The force exerted on the handle 3 creates a compressive force, which is then transmitted to the fixing means 4, which secure the handle 3 to the door.

Such a fixing means 4 generally takes the form of tabs. The tabs allow the door handles to be fixed to the door panel by riveting, or screw/nut to the reinforcement plate located inside the door panel.

The use of several tabs attached to the reinforcement plate makes it possible to distribute the tensile forces exerted on the tabs during the opening of the door, that is, when the handle is operated to open the door.

The fixing means 4 shown here comprises two such longitudinal portions 4a, 4b. However, the invention is not limited to this configuration, and the fixing means 4 may have several longitudinal portions. For example, the fixing means 4 may have four longitudinal portions.

To assemble the door handle 3 to the door panel 2, the door handle equipped with the fixing means 4 is inserted into opening (not shown) of the door panel 2 from the first side 2a, so that these fastening means 4a, 4b extend at least partially from the second side 2b of the door panel 2.

Thus, in the assembled state, these longitudinal portions 4a, 4b extend at least partially from the second side 2b of the door panel 2, which is opposite to the first side 2a.

As shown, each of the longitudinal portions 4a, 4b is fixed at a first end 4e1 to the door handle 3 and at a second end 4e2 to the door panel 2.

More specifically at the door panel 2 level, the longitudinal portions 4a, 4b are fixed to the door panel 2 by screwing and bolting 6 illustrated as an example of the invention.

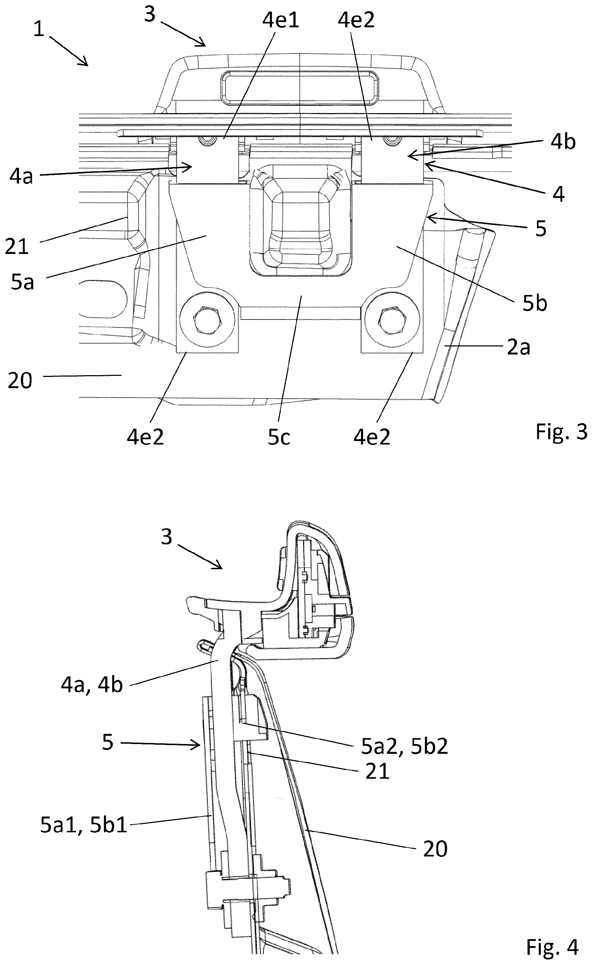

In figures 3 to 5 and 6a-b, we have depicted the door structure 1 according to the invention comprising a reinforcement structure 5 which is configured to secure the two longitudinal portions 4a, 4b to each other.

By securing the two longitudinal portions 4a, 4b to each other, it is possible to reduce the bending of these longitudinal portions when the door handle 3 is operated.

Preferably, the two longitudinal portions 4a, 4b are secured to each other at their maximum flexion point. Preferably, this maximum flexion point corresponds to a central zone of the longitudinal portions 4a, 4b between their ends 4e1, 4e2.

Each longitudinal portion 4a, 4b has a curved section along its length to better conform to the shape of the door panel 2 at the ends 4e1, 4e2.

According to an exemplary embodiment of the invention, the reinforcement structure 5 has at least two lateral portions 5a, 5b connected to each other by a central portion 5c.

Preferably, the lateral portions 5a, 5b and the central portion 5c are made in one piece.

As shown, each lateral portion 5a, 5b is configured to receive a longitudinal portion 4a, 4b of the fixing means 4.

According to a preferred embodiment, each longitudinal portion 4a, 4b of the fixing means 4 is at least partially received in a ring 5a3, 5b3 of the corresponding lateral portion 5a, 5b of the reinforcing structure 5. Such rings 5a3, 5b3 have holes for receiving such longitudinal portion 4a, 4b.

Each lateral portion 5a, 5b of the reinforcing structure 5 comprises a reinforcing portion formed by a reinforcing bracket 5a1, 5b1 designed to sandwich the corresponding longitudinal portion 4a, 4b of the fixing means 4 between said reinforcing bracket 5a1, 5b1 and the door panel 2, more particularly, between said reinforcing bracket 5a1, 5b1 and the reinforcing plate 21.

Thus, the reinforcing structure 5 allows bending of the longitudinal portions 4a, 4b.

Thanks to the configuration of this reinforcing structure 5, it is possible to reinforce the longitudinal portions 4a, 4b of the fixing means 4 in a simple and effective manner.

Furthermore, each lateral portion 5a, 5b has a slot 5a2, 5b2 designed to receive a portion 23 of the door panel 2. In an example, the slot 5a2, 5b2 is formed on the ring 5a3, 5b3 of the corresponding lateral portion 5a, 5b. The portion 23 of the door panel 2 receiving the slot 5a2, 5b2 of a corresponding lateral portion 5a, 5b corresponds to a portion of the contour of an opening of the door panel 2. Here, the portion 23 is a portion of the reinforcing plate 21 of the door panel 2.

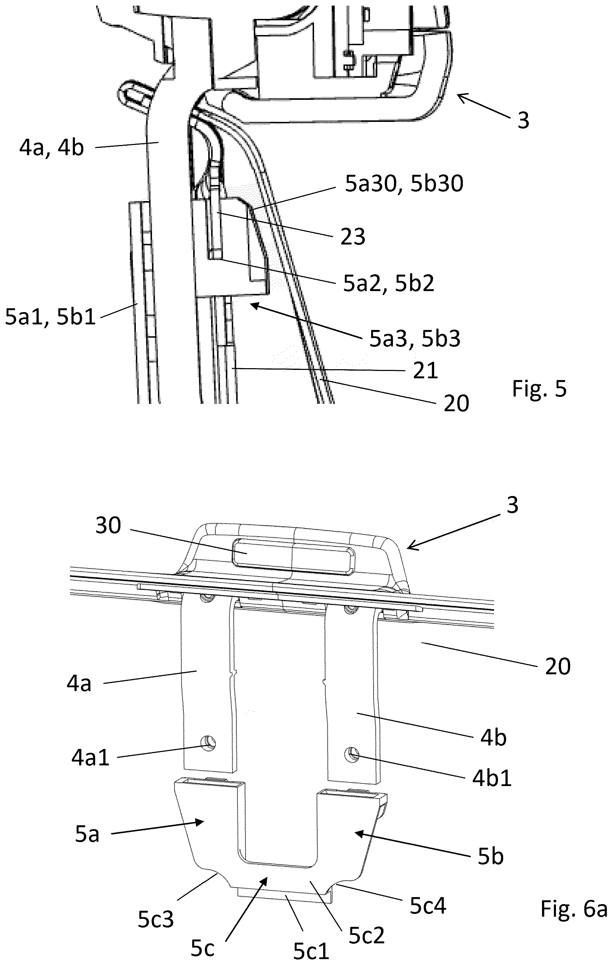

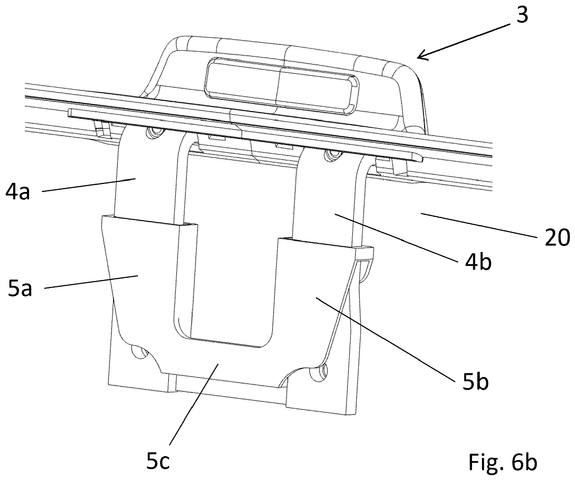

As shown in Figure 6a, the rings 5a3, 5b3 have a rectangular section, each of which receives the end 4e1, 4e2 of the longitudinal portions 4a, 4b. Furthermore, in Figure 5, it can be observed that the rings 5a3, 5b3 have a flared head shape 5a30, 5b30 intended to prevent any constraint of the reinforcement structure 5 against the door panel.

Such slots 5a2, 5b2 are formed by a rib of the corresponding lateral portion 5a, 5b.

The insertion of the slots 5a2, 5b2 in the portion 23 of the door panel 2 makes it possible to ensure the immobilization of the reinforcing structure 5 to the door panel 2, here to the reinforcing plate 21.

According to a preferred configuration, the reinforcing structure 5 is in the shape of a "U" whose two lateral portions 5a, 5b form the arms of the U-shape, and wherein the central portion 5c forms the central arm linked to the two lateral portions 5a, 5b. However, other shapes can be envisaged, such as an "H" shape whose two lateral portions 5a, 5b form the two vertical bars, and whose central portion 5c forms the horizontal bar.

As can be seen in Figure 6a, for example, the lateral portions 5a, 5b have a flared shape towards the central portion 5c.

The central portion 5c is configured to present two walls 5c1, 5c2 opposed to each other and intended to frame the ends of the longitudinal portions 4a, 4b at their attachment to the door panel 2.

As shown in Figure 6a, the central portion 5c has cutouts 5c3, 5c4 intended to be at the level of the attachment of the ends of the longitudinal portions 4a, 4b to the door panel 2. These cutouts 5c3, 5c4 advantageously allow access to the means of attachment provided for these longitudinal portions 4a, 4b.ln the illustrated embodiment, the means for fixing the longitudinal portions 4a, 4b to the door panel 2 are screw/nut assemblies through an opening 4a1, 4b1 formed at the end of each longitudinal portion 4a, 4b.

It will be noted that, in the assembled state, the openings 4a1, 4b1 formed at the ends of the longitudinal portions 4a, 4b are in correspondence with the cutouts 5c3, 5c4 of the central portion 5c.

Furthermore, as indicated, in the assembled state, the two walls 5c1, 5c2 of the central portion 5c frame the ends of the longitudinal portions 4a, 4b at their attachment to the door panel 2.

This configuration ensures the fixed bonding of the reinforcing structure 5 to the longitudinal portions 4a, 4b, as well as to the door panel 2, here to the reinforcement plate 21.

In addition, the reinforcement structure 5 makes it possible to ensure that the handle 3 has been correctly installed when assembling the handle 3, as the reinforcement structure 5 only allows access to the openings 4a1, 4b1 for attaching the longitudinal portions 4a, 4b to the door panel 2 if the reinforcement structure 5 with the slots 5a2, 5b2 is correctly attached on the portion 23. Thus, the cutouts 5c3, 5c4 of the central portion 5c are arranged in such a way that the openings 4a1, 4b1 can be uncovered only when the reinforcing structure 5 with the slots 5a2, 5b2 is correctly attached to the portion 23. When installing the handle 3, it is delivered without the screws in the openings 4a1, 4b1 and the reinforcing structure 5 is in a delivery position in which the openings 4a1, 4b1 are covered. For this purpose, a locking mechanism for the delivery position can be provided at the longitudinal portions 4a, 4b so that the reinforcing structure 5 cannot be moved by mistake. For example, this can be a locking point or a shoulder on at least one longitudinal portion 4a, 4b in which the reinforcing plate 5 engages. For this purpose, a recess or an edge can be arranged on the inside of the reinforcing plate 5 opposite the longitudinal portions 4a, 4b, which makes a form-fit connection to the locking point or the shoulder. Furthermore, it is possible that the reinforcing plate 5 is held in the delivery position by a force-fit connection, for example by a screw. When the handle 3 is placed in the correct position in the door panel 2, the reinforcing plate 5 is moved to an assembly position so that the reinforcing plate 5 with the slots 5a2, 5b2 is correctly attached to the portion 23. After the reinforcing plate 5 is correctly assembled, the reinforcing plate 5 releases the openings 4a1, 4b1 and the longitudinal portions 4a, 4b can be fixed to the door by screws.

Although the invention has been described with reference to a particular embodiment, it should be understood that various modifications can be made without departing from the scope of the invention. Accordingly, the invention is not limited to the specific embodiment described, but encompasses all possible embodiments and modifications within the scope of the appended claims.

## Claims

1. Door structure (1) for a motor vehicle, comprising:
a door panel (2),
a door handle (3) arranged on a first side (2a) of the door panel (2) to perform an opening/closing operation of the structure,
fixing means (4) of the handle (3) extending at least partially on a second side (2b) of the door panel (2) and opposite to the first side (2a),
the fixing means (4) comprising at least two longitudinal portions (4a, 4b) each secured at a first end (4e1) to the door handle (3), and at a second end (4e2) to the door panel (2),
wherein the door structure (1) comprises a reinforcement structure (5) configured to secure the two longitudinal portions (4a, 4b) to each other.

2. Door structure (1) according to the preceding claim, **characterized in that** the reinforcement structure (5) comprises at least two lateral portions (5a, 5b) connected together by a central portion (5c), and **in that** each lateral portion (5a, 5b) is configured to receive at least partially the corresponding longitudinal portion (4a, 4b) of the fixing means (4).

3. Door structure (1) according to the preceding claim, **characterized in that** each longitudinal portion (4a, 4b) of the fixing means (4) is at least partially received through a ring (5a3, 5b3) of the corresponding lateral portion (5a, 5b) of the reinforcement structure (5).

4. Door structure (1) according to one of the preceding claims 2 or 3, **characterized in that** each lateral portion (5a, 5b) of the reinforcement structure (5) comprises a longitudinal portion formed of part of a reinforcement plate (5a1, 5b1) provided to sandwich the corresponding longitudinal portion (4a, 4b) of the fixing means (4) between said reinforcement plate (5a1, 5b1) and the door panel (2).

5. Door structure (1) according to one of claims 2 to 4, **characterized in that** each lateral portion (5a, 5b) has a slot (5a2, 5b2) provided to receive a portion (23) of the door panel (2).

6. Door structure (1) according to claim 5, **characterized in that** the reinforcement structure (5) only allows access to an opening (4a1, 4b1) for attaching the longitudinal portions (4a, 4b) to the door panel (2) if the reinforcement structure (5) with the slots (5a2, 5b2) is correctly attached on the portion (23) of the door panel (2).

7. Door structure (1) according to claim 5 or 6, **characterized in that** the portion (23) of the door panel (2) receiving the slot (5a2, 5b2) of a lateral portion (5a, 5b) corresponds to a portion of the contour of an opening of the door panel (2).

8. Door structure (1) according to one of claims 2 to 7, **characterized in that** the reinforcement structure (5) forms a U-shape, of which the two lateral portions (5a, 5b) form the arms of the U-shape.

9. Door structure (1) according to one of the preceding claims, **characterized in that** the reinforcement structure (5) is in one piece.

10. Vehicle comprising a door structure (1) according to one of the preceding claims.
